# EUROPÄISCHE PATENTSCHRIFT

(11) **EP 4 110 497 B1**
(45) Veröffentlichungstag und Bekanntmachung des Hinweises auf die Patenterteilung: **27.11.2024**
(21) Anmeldenummer: 21709354.1
(22) Anmeldetag: 25.02.2021
(51) Int. Cl.: B01D 21/24, B01D 21/00, B01D 21/30

(54) **KLARWASSER-ABZUGSEINRICHTUNG (DEKANTER) FÜR EINE KLÄRANLAGE**
CLARIFIED WATER WITHDRAWING DEVICE (DECANTER) FOR A CLARIFICATION FACILITY
DISPOSITIF DE SOUTIRAGE D'EAU CLARIFIÉE (DÉCANTEUR) POUR INSTALLATION DE CLARIFICATION

(30) Priorität: 28.02.2020 DE 102020105262; 28.02.2020 DE 202020101092 U
(43) Veröffentlichungstag der Anmeldung: 04.01.2023
(73) Patentinhaber: Biogest International GmbH, 01257 Dresden (DE)
(72) Erfinder: HEUER, Wolfgang, 01257 Dresden (DE); DREXLER, Florian, 01257 Dresden (DE)
(74) Vertreter: Hofstetter, Schurack & Partner
(86) Internationale Anmeldenummer: PCT/EP2021/054720
(87) Internationale Veröffentlichungsnummer: WO 2021/170738

(56) Entgegenhaltungen:
- WO-A1-00/27498
- DE-A1- 10 112 339
- DE-A1- 10 311 402
- DE-A1- 102006 036 591
- DE-A1- 102011 087 966
- DE-A1- 19 636 153
- DE-B4- 10 311 402
- DE-B4- 102011 087 966
- US-A- 4 648 967
- US-A- 5 358 644

## Beschreibung

Die Erfindung betrifft einen Klarwasser- Abzugseinrichtung (Dekanter) für eine Kläranlage gemäß dem Oberbegriff des Patentanspruchs 1.

Bei der biologischen Abwasserreinigung werden die im Abwasser enthaltenen Verschmutzungen mit Hilfe von Kleinstlebewesen, dem so genannten Belebtschlamm, herausgelöst, um ein weitestgehend unverschmutzes Klarwasser zu erhalten. Die Trennung des Belebtschlamms vom Klarwasser erfolgt dabei üblicherweise durch Sedimentation entweder in so genannten "Nachklärbecken" oder in Mischreaktoren, in welchen sich nach Absperren des Zulaufs und nach Ausschalten von Rühr- und Belüftungssystemen der Belebtschlamm unterhalb des Klarwassers am Beckenboden absetzt.

Nach einer Sedimentationszeit von beispielsweise etwa einer Stunde bildet sich hierbei die Klarwasserzone oberhalb des abgesetzten Belebtschlamms, wobei das Klarwasser - neben anderen Technologien - mittels eine Klarwasser-Abzugseinrichtung beziehungsweise eines Klarwasser-Abzugssystems, welches auch als Klarwasser-Dekanter oder kurz als Dekanter bezeichnet wird, aus dem Klärbecken beziehungsweise Mischreaktor entnommen werden kann.

Derartige Dekanter weisen als zentrales Bauteil ein üblicherweise horizontal verlaufendes Einlaufrohr auf, an welches sich beispielsweise T-förmig ein Ablaufrohr anschließt, welches wiederum im Bereich des Klärbeckens beziehungsweise Mischreaktors um ein Unterwasser-Drehgelenk schwenkbar gehalten ist. Mittels einer Seilwinde oder dergleichen Konstruktion lässt sich dabei das Einlaufrohr zwischen einer Parkposition, welche dieses zwischen den Misch- und Sedimentierungsvorgängen einnimmt, und wenigstens einer Entnahmeposition, in welcher das Klarwasser entnommen werden kann, höhenverlagern. Üblicherweise ist hierbei eine dem absinkenden Wasserspiegel in Folge der Klarwasserentnahme durch Eigengewicht folgende Konstruktion mit einer gesteuerten Seilwinde oder dergleichen vorgesehen, sodass das Einlaufrohr mit sinkendem Klarwasserspiegel sukzessive ebenfalls abgesenkt wird. Zum Absaugen beziehungsweise Abziehen des Klarwassers sind innerhalb des Ablaufrohrs eine oder mehrere Einströmöffnungen vorgesehen, welche das Einlaufrohr durchsetzen und über welche Klarwasser aus dem Klärbecken abziehbar und in das Ablaufrohr ableitbar ist.

Problematisch beim Betrieb derartiger absenkbarer Klarwasser-Dekanter ist es, dass sich nach Abschluss der Sedimentierung auf der Oberfläche beziehungsweise dem Horizont des Klarwassers so genannter "Schwimmschlamm" befindet, welcher beispielsweise aus einem Gemisch von Belebtschlamm, Fetten und Leichtstoffen gebildet ist. Dieser "Schwimmschlamm" darf jedoch keinesfalls über die Einströmöffnungen in das Einlaufrohr und im Weiteren in das Ablaufrohr gelangen, da es sonst zu einer unerwünschten (oder sogar unzulässigen) Verunreinigung des abgezogenen Klarwassers kommt. Aus diesem Grund ist es bereits Stand der Technik, ein Abdeckelement in Form einer Blende oder dergleichen einzusetzen, welche die Aufgabe hat, beim Eintauchen in den Wasserhorizont den "Schwimmschlamm" zu verdrängen. Dieses Abdeckelement beziehungsweise diese Blende sind dabei in einem Abstand und in Überdeckung mit der jeweiligen Einströmöffnung fest am Einlaufrohr angeordnet. Gerade bei einer erheblichen Schichtdicke des "Schwimmschlamms" kann es jedoch über den Abstand beziehungsweise den Spalt zwischen dem Abdeckelement/der Blende und dem Einlaufrohr zu einem unerwünschten Eindringen von "Schwimmschlamm" in das abgezogene Klarwasser kommen. DE 10 2011 087966 und DE 10 2006 036591 sind Beispiel dieser Systeme.

Aufgabe der vorliegenden Erfindung ist es daher, einen Dekanter der eingangs genannten Art zu schaffen, mittels welchem sich Verschmutzungen des Klarwassers besonders günstig vermeiden lassen. Diese Aufgabe wird erfindungsgemäß durch einen Dekanter mit den Merkmalen des Patentanspruchs 1 gelöst. Vorteilhafte Ausgestaltungen mit zweckmäßigen Weiterbildungen der Erfindung sind Gegenstand der abhängigen Ansprüche.

Um einen Klarwasser-Dekanter zu schaffen, mittels welchem beim Einfahren des Dekanters in das Klärbecken beziehungsweise den Mischreaktor ein Eindringen von an der Wasseroberfläche oberhalb des Klarwassers sich ansammelndem "Schwimmschlamm" über die wenigstens eine Einströmöffnung in das Einlaufrohr und im Weiteren in den Ablauf des Dekanters zu vermeiden, ist erfindungsgemäß eine Verlagerungseinrichtung vorgesehen, mittels welcher das Abdeckelement zwischen einer Schließstellung und einer Einströmstellung verlagerbar ist. Die Verlagerungseinrichtung umfasst dabei wenigstens ein Auftriebselement, mittels welchem das Abdeckelement in Folge eines Eintauchens des Auftriebselements beispielsweise in den Wasserhorizont des Klarwassers und somit unterhalb der Schwimmschlammschicht in dessen Einströmstellung zu verlagern. Hierbei ist die Verlagerungseinrichtung beispielsweise geometrisch und gewichtsmäßig so ausgelegt, dass sich das Abdeckelement vor dem Eintauchen in das Klärbecken schwerkraftsbedingt in der Schließstellung befindet. Trifft dann das Auftriebselement auf den Wasserhorizont beziehungsweise die Oberfläche des Klarwassers auf, so wird dieser in weiteren Fortgang der Absenkbewegung des Dekanters und des Einlaufrohres infolge der Auftriebskraft relativ zum Einlaufrohr verlagert, wodurch - unter Vermittlung der Verlagerungseinrichtung - das Abdeckelement aus der schwerkraftsbedingten Schließstellung in die Einströmstellung gelangt, in welcher das Klarwasser über die Einströmöffnungen abgezogen werden kann. Zu dem Zeitpunkt, an dem das Abdeckelement in die Einströmstellung verlagert wird, befindet sich das Einlaufrohr und deren Einströmöffnungen bereits unterhalb des "Schwimmschlamms" im Bereich der Klarwasserschicht.

Mit anderen Worten wird durch die Verlagerungseinrichtung und insbesondere durch deren Auftriebselement erreicht, dass sich beim Eintauchen des Einlaufrohrs in den Wasserhorizont des "Schwimmschlamms" das Abdeckelement in seiner die jeweiligen Einströmöffnungen des Einlaufrohrs verschließenden Schließstellung befindet, um diese gegen ein Eindringen von "Schwimmschlamm" in das Einlaufrohr zu verschließen. Im Verlauf der weiteren Absenkbewegung wird dann das Abdeckelement - mittels der Auftriebskraft beim Auftreffen des Auftriebselements auf den Horizont beziehungsweise die Wasseroberfläche - das Abdeckelement in die Einströmstellung verlagert, und zwar zu einem Zeitpunkt, in welchem sich die Einströmöffnungen des Eilaufrohres bereits unter der Oberfläche der Klarwasserschicht befinden, Der besondere Vorteil des Auftriebselements besteht dabei darin, dass allein aufgrund physikalischer Kräfte, nämlich in Folge der entsprechenden Wasserverdrängung, eine Verlagerungsbewegung der Verlagerungseinrichtung initiiert wird, mittels welcher das Abdeckelement zwangsweise in seine Offenstellung verlagert wird.

Alternativ hierzu ist in einer nicht beanspruchten, aber gleichwohl zur Erfindung gehörenden Variante auch denkbar, das Abdeckelement mittels eines aktuatorischen oder dergleichen Antriebs aus der Einströmstellung in die Schließstellung - und zurück - zu verlagern. Diese Verlagerung könnte beispielsweise mittels einer Näherungssensorik erfolgen, wenn das Einlaufrohr auf den "Schwimmschlamm" auftrifft. Allerdings ist diese Ausgestaltungsform technisch aufwändiger.

Die erfindungsgemäße und beanspruchte Verlagerungseinrichtung hat jedoch den großen Vorteil, dass diese lediglich aufgrund der Auftriebskraft des Auftriebselements beim Eintauchen in den Wasserhorizont beziehungsweise "Schwimmschlamm" betätigt und hierdurch das Abdeckelement verlagert wird. Im vorliegenden Fall ist es so, dass das Abdeckelement mittels der Verlagerungseinrichtung vor dem Eintauchen in das Klärbecken zunächst aufgrund der Schwerkraft der Bauteile der Verlagerungseinrichtung in der Schließstellung gehalten ist, in welcher die wenigstens eine Einströmöffnung vor einem Einströmen von "Schwimmschlamm" geschützt ist, gehalten ist, und dann beim Eintauchen des Einlaufrohrs beziehungsweise der Verlagerungseinrichtung mit dem Auftriebselement in die Klarwasserschicht in die Offenstellung verlagert wird. Die Bauteile der Verlagerungseinrichtung sowie das Einlaufrohr sind dabei geometrisch so aufeinander abgestimmt, dass das Abdeckelement erst in seine Einströmstellung verlagert wird und demzufolge die wenigstens eine Einströmöffnung freigibt, wenn das Ablaufrohr und dessen Einströmöffnung den "Schwimmschlamm" durchdrungen haben, und die Klarwasserschicht im Klärbecken erreicht haben. Somit ist es möglich, dass das Einlaufrohr mit geschlossenem Abdeckelement den "Schwimmschlamm" durchdringt und erst im Nachhinein - in Folge der geometrischen Ausgestaltung der Verlagerungseinrichtung mit dem Auftriebselement relativ zum Einlaufrohr - eine Verlagerung des Abdeckelements nach dem Durchdringen des "Schwimmschlamms" und Erreichen der Klarwasserschicht in die Einströmstellung das zwischenzeitlich den "Schwimmschlamm" erreichende Auftriebselement in Folge der auf dieses wirkenden Auftriebskraft eine Verstellung des Abdeckelements initiiert.

In weiterer Ausgestaltung der Erfindung hat es sich als vorteilhaft gezeigt, wenn das wenigstens eine Abdeckelement unterhalb der wenigstens einen Einströmöffnung des Einlaufrohres angeordnet ist. Eine unterseitige Anordnung des Abdeckelements relativ zum Einlaufrohr hat dabei insbesondere den Vorteil, dass die in dem Einlaufrohr vorgesehenen Einströmöffnungen ebenfalls unterseitig des Einlaufrohrs angeordnet sein können. Dies wiederum hat den Vorteil, dass einerseits Klarwasser bis nahe der Sedimentschicht abgezogen werden kann, andererseits jedoch durch das Abdeckelement sichergestellt ist, dass keine Sedimente beziehungsweise Belebtschlamm in das Einlaufrohr gelangt.

Zudem hat es sich als vorteilhaft gezeigt, wenn das wenigstens eine Abdeckelement in der Einströmstellung mit einer Unterseite des Einlaufrohrs in dessen Entnahmeposition einen zumindest im Wesentlichen horizontal verlaufenden Einströmkanal ausbildet. Durch den horizontal verlaufenden Einströmkanal beziehungsweise das unterseitig der wenigstens einen Einströmöffnung angeordnete Abdeckelement wird dabei sichergestellt, dass Klarwasser lediglich quasi horizontal zur jeweiligen Einströmöffnung gelangen kann, und nicht etwa vertikal, da sich unterhalb der Einströmöffnung und in Überdeckung mit dieser das jeweilige Abdeckelement in seiner Einströmstellung befindet. Dies hat den wesentlichen Vorteil, dass insbesondere vertikal unterhalb der Einströmöffnungen Klarwasser in Folge einer Sogwirkung nicht eingesaugt werden kann, sondern dass vielmehr unmittelbar unterhalb der jeweiligen Einströmöffnung das Abdeckelement angeordnet ist. Somit muss das Klarwasser über den horizontal verlaufenden Einströmkanal einströmen, was wiederum bewirkt, dass keine entsprechenden Wirbel oder dergleichen Sogeffekte unterhalb der jeweiligen Einströmöffnung zu einem Einsaugen von Sedimenten beziehungsweise Belebtschlamm führen kann.

In weiterer Ausgestaltung der Erfindung ist es vorgesehen, dass das wenigstens eine Abdeckelement in der Schließstellung die wenigstens eine Einströmöffnung zumindest im Wesentlichen dicht verschließt. Diese Dichtigkeit kann beispielsweise erreicht werden, indem das Abdeckelement in seiner geometrischen Form an diejenige der Außenkontur des Ablaufrohrs abgestimmt ist. Eine entsprechende flächige Anlage des Abdeckelements in seiner Schließstellung an dem Einlaufrohr bewirkt demzufolge bereits eine hinreichende Abdichtung beziehungsweise einen hinreichenden Verschluss der jeweiligen Einströmöffnung für das Klarwasser, um beispielsweise das Eindringen von "Schwimmschlamm" zu vermeiden. In einer alternativen Ausführungsform kann zwischen dem Abdeckelement und dem Einlaufrohr auch eine entsprechende Dichtung vorgesehen sein, welche die jeweilige Einströmöffnung außenumfangsseitig umgibt.

In weiterer vorteilhafter Ausgestaltung der Erfindung ist vorgesehen, dass die Verlagerungseinrichtung jeweilige, an einer Stirnseite des Einlaufrohres gelagerte Hebelarme aufweist, an welchen einerseits der wenigstens eine Auftriebskörper und andererseits das wenigstens eine Abdeckelement angeordnet sind. Hierdurch ist zunächst eine besonders einfache und betriebssichere Verlagerungseinrichtung geschaffen, wobei durch auf den Auftriebskörper wirkende Kräfte beim Ein- und Auftauchen in beziehungsweise aus dem Klärbecken zuverlässig und sicher zu einer entsprechenden Verlagerung des Abdeckelements zwischen der Schließstellung und der Einströmstellung führen. Andererseits kann über die Positionierung des Auftriebskörpers und der Hebelarme relativ zum Einlaufrohr in einfacher Weise geometrisch bestimmt werden, wann das Abdeckelement aus seiner Schließstellung in seine Einströmstellung verlagert werden soll, beispielsweise beim Eintauchen des Einlaufrohrs mit dem Auftriebskörper in das Klärbecken.

In diesem Zusammenhang hat es sich als weiter vorteilhaft gezeigt, wenn die Hebelarme eine jeweilige Kulissenführung für ein zugeordnetes, an der Stirnseite des Einlaufrohres angeordnetes Führungselement aufweisen. Durch eine derartige Kulissenführung im Zusammenspiel mit dem auf Seiten des Einlaufrohrs jeweils angeordneten Führungselement kann somit auf einfache Weise eine betriebssichere Verlagerung des Abdeckelements zwischen der Schließstellung und der Einströmstellung erreicht werden. Über dies können die jeweiligen Enden der Kulissenführung auch als Endanschläge dienen, welche die jeweilige Schließstellung beziehungsweise Einströmstellung des Abdeckelements bestimmen.

Ebenfalls hat es sich in diesem Zusammenhang als vorteilhaft gezeigt, wenn die Hebelarme über ein jeweiliges, einstellbares Schwenklager am Einlaufrohr angeordnet sind, wodurch die Relativlage und Dichtheit des Abdeckelements in seiner Schließstellung relativ zu dem Einlaufrohr einstellbar ist. Indem die Lagerstelle der jeweiligen Hebelarme einstellbar ausgestaltet ist, können somit auf einfache Weise entsprechende Justierungen der Schließstellung und der Einströmstellung des Abdeckelements erreicht werden.

Das wenigstens eine Auftriebselement ist in weiterer Ausgestaltung der Erfindung insbesondere als mit einem Gas, insbesondere mit Luft, befüllter Hohlkörper ausgebildet. Dies ermöglicht eine besonders einfache Ausgestaltung des Auftriebselements. Alternativ wären jedoch auch andere Auftriebskörper, beispielsweise aus einem Kunststoffschaum, einem anderen Kunststoffmaterial oder dergleichen denkbar.

In weiterer vorteilhafter Ausgestaltung der Erfindung ist vorgesehen, dass das Abdeckelement und/oder die Bauelemente der Verlagerungseinrichtung aus einem Stahlwerkstoff, insbesondere einem Edelstahlwerkstoff oder einem beschichteten Stahlwerkstoff, und/oder aus einem Kunststoff beziehungsweise in Hybridbauweise dieser Werkstoffe gebildet sind. Durch die Auswahl der entsprechend beschriebenen Werkstoffe für die jeweiligen Bauelemente der Verlagerungseinrichtung und des Abdeckelements wird insgesamt erreicht, dass sich auch im jahrelangen Betrieb keine Korrosion, Abrasion oder dergleichen in Folge der permanenten Verlagerung des Auftriebselements beziehungsweise des Abdeckelements zwischen seiner Schließstellung und seiner Einströmstellung zwischen den jeweils aneinander angrenzenden Bauteilen ergibt. Schließlich hat es sich als vorteilhaft gezeigt, wenn das Einlaufrohr mit einer Mehrzahl von in einer Reihe angeordneten Einströmöffnungen durchsetzt ist. Hierdurch ergibt sich ein besonders wirkungsvoller Klarwasserabzug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:

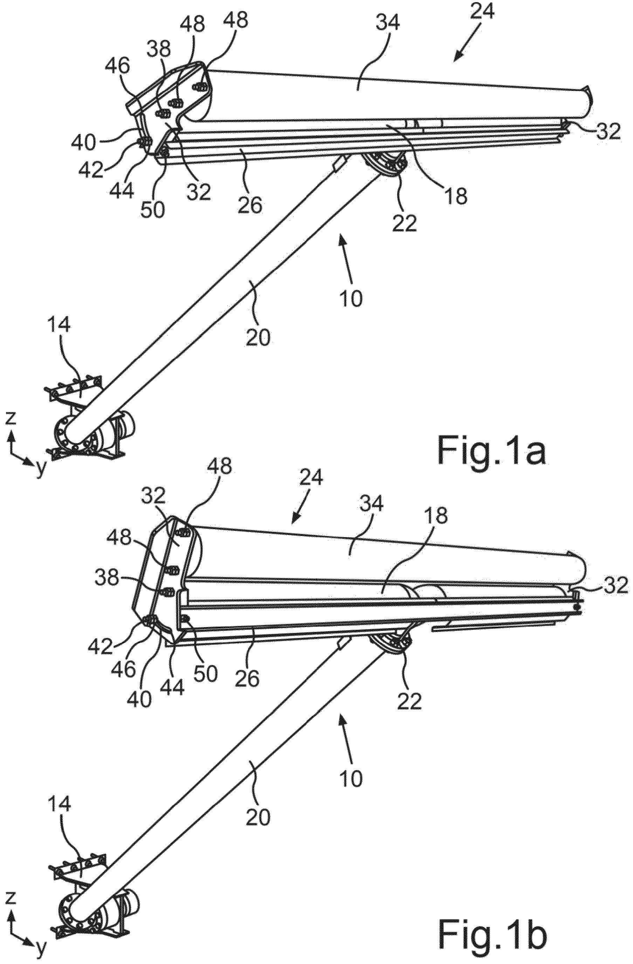

- Fig. 1a, 1b: jeweils eine Perspektivansicht auf einen erfindungsgemäßen Dekanter für eine Kläranlage mit einem Einlaufrohr und mit einem T-förmig dazu angeordneten Ablaufrohr, an dessen Ende der Dekanter an einem Beckenrand des Klärbeckens schwenkgelagert ist und dem Einlaufrohr zugeordneter Verlagerungseinrichtung, welche ein Auftriebselement umfasst, welches über jeweilige, stirnseitig des Einlaufrohrs gelagerte Hebelarme schwenkgelagert ist und mittels welchem zum Verschließen wenigstens einer das Einlaufrohr unterseitig durchsetzenden Einströmöffnung zwischen einer in Fig. 1a gezeigten Schließstellung und einer in Fig. 1b gezeigten Einströmöffnung verlagerbar ist, wenn der Dekanter in das Klärbecken eingetaucht ist und das Auftriebselement und in Vermittlung dessen das Abdeckelement verlagert werden;

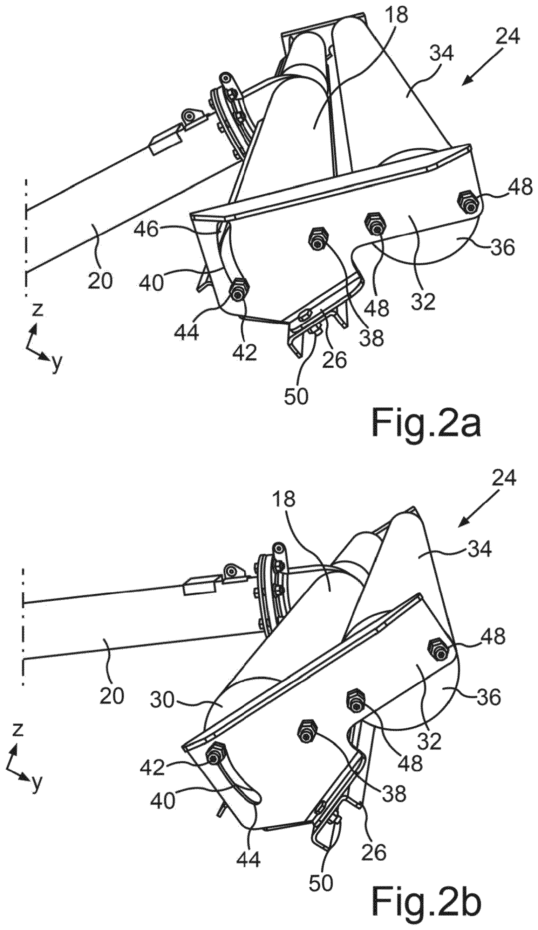

- Fig. 2a, 2b: jeweilige ausschnittsweise Perspektivansichten auf die am Einlaufrohr gelagerte Verlagerungseinrichtung mit den jeweiligen, stirnseitig des Einlaufrohrs angeordneten Hebelarmen, an welchen einerseits das Auftriebselement und andererseits das Abdeckelement zum Verschließen beziehungsweise zum Öffnen der wenigstens einen, das Einlaufrohr durchsetzenden Einströmöffnung vorgesehen sind, wobei Fig. 2a in der Schließstellung des Abdeckelements zeigt, in welcher dieses die jeweiligen, unterseitig des Einlaufrohrs angeordneten Einströmöffnungen verschließt, und Fig. 2b die Verlagerungseinrichtung entlang jeweiliger, in dem Hebelarm angeordneter Kulissenführungen in Form von bogenförmigen Langlöchern zeigt, welche infolge des durch das Auftriebselement wirkenden Auftriebskraft beim Eintauchen entsprechend verlagert ist, sodass sich das Abdeckelement in seiner Einströmstellung befindet;

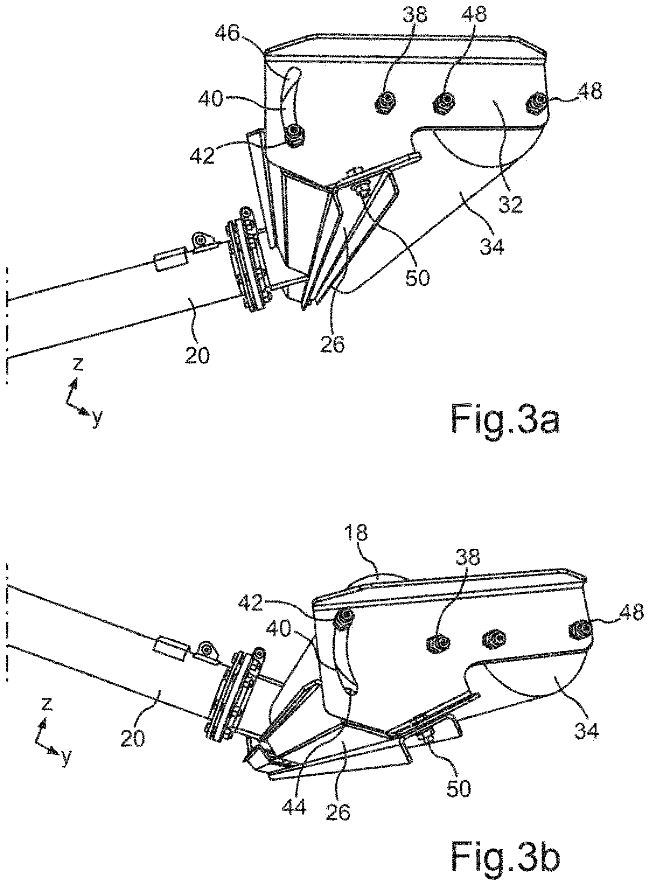

- Fig. 3a, 3b: jeweilige ausschnittsweise Perspektivansichten auf das Einlaufrohr des Dekanters mit der Verlagerungseinrichtung, wobei auch hier Fig. 3a die Verlagerungseinrichtung mit dem Abdeckelement in seiner Schließstellung und Fig. 3b das Einlaufrohr mit der Verlagerungseinrichtung mit dem Abdeckelement in seiner Einströmstellung zeigt;

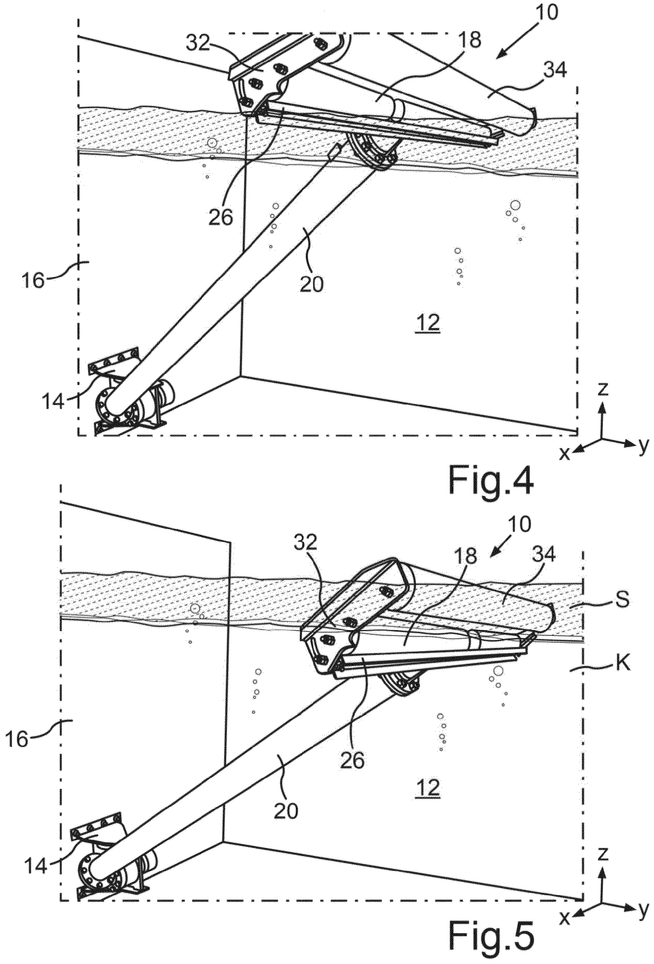

- Fig. 4: eine Perspektivansicht auf den am Beckenrand eines mit Abwasser gefüllten Klärbeckens gelagerten Dekanter gemäß der Erfindung, wobei sich das Einlaufrohr und die zugehörige Verlagerungseinrichtung zu Beginn einer Absenkbewegung noch oberhalb einer "Schlammschicht" des Abwassers befinden, wobei das Abdeckelement infolge der Schwerkraft der Verlagerungseinrichtung in seiner die jeweiligen Einlauföffnungen unterseitig des Einlaufrohrs verschließenden Schließstellung;
- Fig. 5: eine weitere Perspektivansicht des Dekanters analog zu Fig. 4 im weiteren Verlauf der Absenkbewegung, wobei erkennbar ist, dass das Einlaufrohr bereits durch die an der Oberfläche einer Klarwasserschicht "Schwimmschlammzone" durchdrungen beziehungsweise in die Klarwasserzone eingedrungen ist, und wobei das Auftriebselement der Verlagerungseinrichtung der Absenkbewegung gerade auf der Oberfläche des Klarwassers aufsitzt zu diesem Zeitpunkt infolge der nach wie vor wirkenden Schwerkraft auf die Verlagerungseinrichtung das Abdeckelement nach wie vor sich in seiner Schließstellung befindet; und

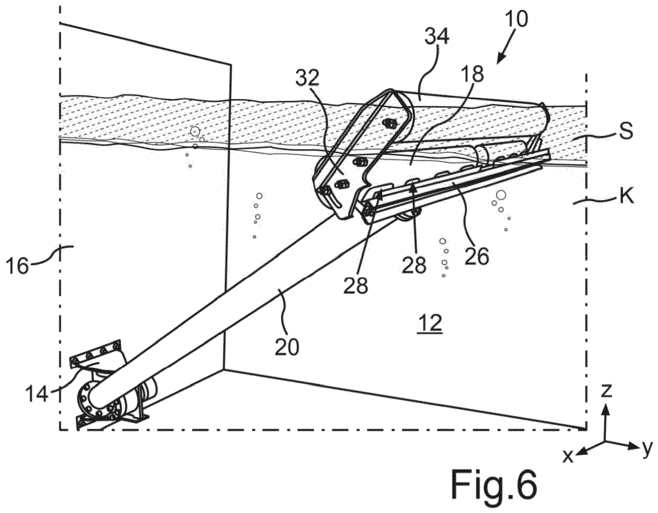

- Fig. 6: eine weitere Perspektivansicht auf den Dekanter im Verlauf der weiteren Absenkbewegung analog zu den Fig. 4 und 5, wobei erkennbar ist, dass infolge der durch den Wasserhorizont des Klarwassers auf das Auftriebselement wirkenden Auftriebskraft das Abdeckelement unter Vermittlung der Verlagerungseinrichtung in die Einströmstellung verlagert worden ist, in welcher dieses eine Mehrzahl von an der Unterseite des Einlaufrohrs erkennbaren Einströmöffnungen freigibt, sodass Klarwasser in das Einlaufrohr gelangen kann.

In den Fig. 1a und 1b ist in einer jeweiligen Perspektivansicht ein Dekanter 10 für eine Kläranlage erkennbar. Dieser Dekanter 10 ist - wie dies sich in Zusammenschau mit den Fig. 4, 5 und 6 ebenfalls in jeweiligen Perspektivansichten ergibt - innerhalb eines Klärbeckens 12, insbesondere eines Mischreaktors der Kläranlage angeordnet. Genauer gesagt ist der Dekanter 10 mittels einer Lagerkonsole 14 an einem Beckenrand 16 des Klärbeckens 12 schwenklagerbar fixiert.

Der Dekanter 10 ist im Wesentlichen T-förmig ausgebildet und umfasst ein Einlaufrohr 18, über welches auf im Weiteren noch näher beschriebene Weise Klarwasser aus dem Klärbecken beziehungsweise Mischreaktor 12 abziehbar und in ein Ablaufrohr 20 ableitbar ist, welches über jeweilige Flanschverbindungen 22 mit dem vorliegend sich mittig verjüngenden Einlaufrohr 18 verbunden ist. Über das Ablaufrohr 20 kann das Klarwasser dann dem weiteren Prozess bei der biologischen Abwasserreinigung zugeführt werden. Als im Rahmen der Erfindung mitumfasst ist es zu betrachten, dass auch mehrere Ablaufrohre 20 vorgesehen sein können. Über das Ablaufrohr 20 ist zudem das Einlaufrohr 18 abgestützt und im Bereich der Lagerkonsole 14 schwenkgelagert. Der Dekanter 10 lässt sich hierbei beispielsweise mittels einer Seilwinde oder dergleichen Hebe- und Senkeinrichtung, welche vorliegend nicht gezeigt ist, an einem Angriffspunkt fern der Lagerkonsole 14 anheben beziehungsweise absenken, wie dies in Zusammenschau mit dem Fig. 4, 5 und 6 im Weiteren noch näher erläutert werden wird. Ein Absenken beziehungsweise Anheben des Dekanters 10 erfolgt demzufolge durch Verlagerung um seine Schwenkachse im Bereich der Lagerkonsole 14.

Wie in Zusammenschau der Fig. 1a und 1b mit den weiteren Fig. 2a bis 3b, welche jeweils in Perspektivansicht ausschnittsweise und vergrößert den Dekanter 10 im Bereich des Einlaufrohrs 18 zeigen, erkennbar ist, ist am Einlaufrohr 18 außerdem eine Verlagerungseinrichtung 24 vorgesehen, mittels welcher ein im Weiteren noch näher erläutertes Abdeckelement 26 in Form einer Rinne oder dergleichen zwischen einer in den jeweiligen Fig. 1a, 2a und 3a gezeigten Schließstellung in eine jeweilige, in den Fig. 1b, 2b und 3b gezeigten Einströmstellung verlagerbar ist, in welcher das Abdeckelement 26 eine Mehrzahl von in Fig. 6 erkennbaren Einströmöffnungen 28 freigibt, welche das Einlaufrohr 18 durchsetzen und über welche Klarwasser aus dem Klärbecken in das Einlaufrohr 18 gelangen und im Weiteren über das Ablaufrohr 20 abgesaugt werden kann.

Die Verlagerungseinrichtung 24 weist jeweilige, an einer zugehörigen Stirnseite 30 des Einlaufrohrs 18 gelagerte Hebelarme 32 auf, an welchen einerseits ein Auftriebskörper 34 und ein Abdeckelement 26 gehalten ist. Diese Hebelarme 32 sind vorliegend beispielsweise als ebene Plattenelemente oder dergleichen gestaltet. Andere Ausführungen wären natürlich auch denkbar.

Die Lagerung der Hebelarme 32 an der korrespondierenden Stirnseite 36 des Einlaufrohres 18 erfolgt vorliegend im Bereich einer durch eine Schraube 38 gebildeten Lagerstelle, um welche die beiden Hebelarme 32 relativ zu dem Einlaufrohr 18 beziehungsweise der jeweiligen Stirnseite 36 verschwenkbar sind. Jeder der beiden Hebelarme 32 weist zudem eine jeweilige Kulissenführung 40 in Form eines bogenförmigen Langlochs auf, welche die Schraube 38 zum Zentrum hat, und in welche ein zugeordnetes, von der Stirnseite 36 des Einlaufrohres 18 abstehendes Führungselement 42 eingreift. Die Schwenkbewegung der beiden Hebelarme 32 um die durch die Schrauben 38 gebildete Schwenkachse ist somit durch die Kulissenführung 40 und durch jeweiligen Endanschläge 44, 46 begrenzt.

Das Auftriebselement 34 ist vorliegend als Rohrkörper beziehungsweise Hohlkörper ausgebildet, welcher auf die Länge des Einlaufrohres 18 angepasst ist. Das Auftriebselement 34 ist vorliegend mit einem Gas, insbesondere mit Luft, befüllt. Gleichfalls wären auch jedwede anderen Auftriebskörper aus einem anderen Material und in anderer Form denkbar. Dem Fachmann sind hier Alternativen geläufig. Zudem ist das Auftriebselement 34 vorliegend über zwei jeweilige Schrauben 48 mit dem jeweiligen Hebelarm 32 fest verbunden.

Auf den die Schwenkachse der Hebelarme 32 bildenden Schrauben 38 abgewandten Seite ist unterseitig an den Hebelarmen 32 das Abdeckelement 26 befestigt. Über eine Schraube 50 ist das Abdeckelement 26 am jeweiligen Hebelarm 32 befestigbar und gegebenenfalls auch einstellbar. Beispielsweise ist es hierdurch möglich, das Abdeckelement 26 über die Schraube 50 in seiner Position relativ zum Einlaufrohr 18 einzustellen, um beispielsweise in der im Weiten noch näher erläuterten Schließstellung des Abdeckelements 26 einen hinreichenden Verschluss der Einströmöffnungen 28 beziehungsweise eine hinreichende Dichtheit zwischen dem Abdeckelement 26 und dem Einlaufrohr 18 zu erreichen. Alternativ oder zusätzlich wäre es zudem denkbar, dass die Hebelarme 32 über ein jeweiliges, einstellbares Schwenklager (Schraube 38) am Einlaufrohr 18 angeordnet sind, wodurch die Relativlage und Dichtheit des Abdeckelements 26 in seiner Schließstellung relativ zu dem Einlaufrohr einstellbar ist.

Das Abdeckelement 24 und/oder die Bauelemente der Verlagerungseinrichtung 24 sind vorzugsweise aus einem Stahlwerkstoff, insbesondere einem Edelstahlwerkstoff oder einem beschichteten Stahlwerkstoff, und/oder aus einem Kunststoff beziehungsweise in Hybridbauweise dieser Werkstoffe gebildet. Durch die Auswahl der entsprechend beschriebenen Werkstoffe für die jeweiligen Bauelemente der Verlagerungseinrichtung 24 und des Abdeckelements 24 wird insgesamt erreicht, dass sich auch im Dauerbetrieb keine Korrosion, Abrasion oder dergleichen in Folge der permanenten Verlagerung des Auftriebselements 34 beziehungsweise des Abdeckelements 26 zwischen seiner Schließstellung und seiner Einströmstellung zwischen den jeweils aneinander angrenzenden Bauteilen ergibt.

Anhand der Fig. 4 bis 6 soll schließlich die Funktionsweise des Dekanters 10 und der Verlagerungseinrichtung 24 mit dem Abdeckelement 26 und dem Auftriebselement 34 näher erläutert werden:
Hierzu zeigen die Fig. 4 bis 6 in einer jeweiligen Perspektivansicht den am Beckenrand 16 des mit Abwasser gefüllten Klärbeckens 12 beziehungsweise Mischreaktors gelagerten Dekanter 10 während eines Absenkens in das Klärbecken 12 zwischen einer Parkposition und einer jeweiligen Entnahmeposition. In Fig. 4 ist dabei erkennbar, dass sich sowohl das Einlaufrohr 18 als auch die Verlagerungseinrichtung 24 mit dem Abdeckelement 26 noch oberhalb des Schwimmschlamms S befindet, welcher oberseitig der Klarwasserschicht K aufschwimmt. Hierbei ist die Verlagerungseinrichtung 24 beispielsweise geometrisch und gewichtsmäßig so ausgelegt, dass sich das Abdeckelement 26 vor dem Eintauchen in das Klärbecken schwerkraftsbedingt in der Schließstellung befindet. Dies wird im vorliegenden Fall insbesondere durch die Auslegung der Hebelarme 32 und das Gewicht des Auftriebskörpers 34 erreicht. In der Schließstellung befindet sich das jeweilige Führungselement 42 am unteren Endanschlag 44 der jeweiligen Kulissenführung. Die Einströmöffnungen 28 des Einlaufrohres 18 sind somit gegen einen Eintritt von "Schwimmschlamm" S verschlossen.

Im weiteren Verlauf der Absenkbewegung des Dekanters 10 gemäß fig. 5 taucht dann zunächst das Einlaufrohr 18 durch den "Schwimmschlamm" S hindurch um im Weiteren in die Klarwasserschicht K ein. Somit befinden sich auch die Einströmöffnungen 28, welche unterseitig des Einlaufrohres 18 angeordnet sind, bereits im Bereich des Klarwassers K.

Aufgrund der geometrischen Ausgestaltung der Verlagerungseinrichtung 24 befindet sich allerdings das Abdeckelement 26 nach wie vor in der Schließstellung, da das Auftriebselement 34 gemäß Fig. 5 im Verlauf der Absenkbewegung gerade erst die "Schlammschicht" durchstoßen hat (welche zumindest keinen nennenswerten Auftrieb erzeugt) und erst jetzt mit der Oberfläche des Klarwassers K in Kontakt kommt.

Erst durch das Auftreffen und Eintauchen des Auftriebselement 34 auf beziehungsweise in die Klarwasserschicht K gemäß Fig. 6 entsteht im weiteren Verlauf der Absenkbewegung des Dekanters 10 eine hinreichende, auf das Auftriebselement 34 wirkende Auftriebskraft, welche bewirkt, das mittels der Hebelarme 34 der Verlagerungseinrichtung 24 das Abdeckelement 26 in die Einströmstellung verlagert wird, in welcher ein Einströmen und Absaugen von Klarwasser K über die nun frei gegebenen und erkennbaren Einströmöffnungen möglich wird. Hierbei ist das Abdeckelement 26 in der Einströmstellung in Überdeckung mit der wenigstens einen Einströmöffnung 28 angeordnet.

Im weiteren Verlauf wird dann der Dekanter 10 mit absinkender Klarwasserschicht weiter abgesenkt. Zum Ende der Absenkbewegung gelangt das Einlaufrohr 18 infolge der Verlagerung im die Lagerkonsole 14 derart in den Nahbereich oberhalb der Sedimentschicht beziehungsweise den Belebschlamm, welcher sich unterhalb der Klarwasserschicht K abgesetzt hat, dass das Abdeckelement 26 unterhalb der unterseitig des Ablaufrohres 18 angeordneten Einströmöffnungen 28 angeordnet ist. Eine derartige unterseitige Anordnung des Abdeckelements 26 relativ zum Einlaufrohr hat dabei insbesondere den Vorteil, dass die in dem Einlaufrohr 18 vorgesehenen Einströmöffnungen 28 ebenfalls unterseitig des Einlaufrohrs 18 angeordnet sein können. Dies wiederum hat den Vorteil, dass einerseits Klarwasser K bis nahe der Sedimentschicht abgezogen werden kann, andererseits jedoch durch das Abdeckelement 26 sichergestellt ist, dass keine Sedimente beziehungsweise Belebtschlamm in das Einlaufrohr 18 gelangt.

Zudem ist zumindest in dieser untersten Entnahmeposition des Dekanters 10 einen zumindest im Wesentlichen horizontal verlaufenden Einströmkanal ausbildet. Durch den horizontal verlaufenden Einströmkanal beziehungsweise das unterseitig der wenigstens einen Einströmöffnung 28 angeordnete Abdeckelement 26 wird dabei sichergestellt, dass Klarwasser K lediglich quasi horizontal zur jeweiligen Einströmöffnung 28 gelangen kann, und nicht etwa vertikal, da sich unterhalb der Einströmöffnung 28 und in Überdeckung mit dieser das jeweilige Abdeckelement 26 in seiner Einströmstellung befindet. Dies hat den wesentlichen Vorteil, dass insbesondere vertikal unterhalb der Einströmöffnungen 28 Klarwasser in Folge einer Sogwirkung nicht eingesaugt werden kann, sondern dass vielmehr unmittelbar unterhalb der jeweiligen Einströmöffnung 28 das Abdeckelement 26 angeordnet ist. Somit muss das Klarwasser K über den horizontal verlaufenden Einströmkanal einströmen, was wiederum bewirkt, dass keine entsprechenden Wirbel oder dergleichen Sogeffekte unterhalb der jeweiligen Einströmöffnung28 zu einem Einsaugen von Sedimenten beziehungsweise Belebtschlamm führen kann.

### Bezugszeichenliste

- 10: Dekanter
- 12: Klärbecken
- 14: Lagerkonsole
- 16: Beckenrand
- 18: Einlaufrohr
- 20: Ablaufrohr
- 22: Flanschverbindungen
- 24: Verlagerungseinrichtung
- 26: Abdeckelement
- 28: Einströmöffnung
- 30: Stirnseite
- 32: Hebelarm
- 34: Auftriebselement
- 36: Stirnseite
- 38: Schrauben
- 40: Kulissenführung
- 42: Führungselement
- 44: Endanschlag
- 46: Endanschlag
- 48: Schrauben
- 50: Schraube

- K: Klarwasserschicht
- S: Schlammschicht

## Patentansprüche

1. Dekanter (10) für eine Kläranlage, mit einem zwischen einer Parkposition und einer Entnahmeposition verlagerbaren Einlaufrohr (18), welches mit wenigstens einer Einströmöffnung (28) durchsetzt ist, über welche Klarwasser unterhalb einer Schwimmschlammschicht aus einem Klärbecken (12) abziehbar und in ein Ablaufrohr (20) ableitbar ist, und mit wenigstens einem Abdeckelement (26), welches in einer Einströmstellung unterhalb und in Überdeckung mit der wenigstens einen, das Einlaufrohr (18) unterseitig durchsetzenden Einströmöffnung (28) angeordnet ist und diese freigibt,
**dadurch gekennzeichnet, dass**
das Abdeckelement (26) zwischen einer die wenigstens eine Einströmöffnung (28) verschließende Schließstellung und der Einströmstellung mittels einer Verlagerungseinrichtung (24) verlagerbar ist, welche wenigstens ein Auftriebselement (34) umfasst, mittels welchem das Abdeckelement (26) infolge eines Eintauchens des Auftriebselements (34) in das Abwasser in die Schließstellung verlagerbar ist, wobei sich das Abdeckelement (26) vor dem Eintauchen in das Klärbecken (12) und dem Durchtauchen der Schwimmschlammschicht in der Schließstellung befindet und durch das Auftreffen und Eintauchen des Auftriebselements (34) auf beziehungsweise in die Klarwasserschicht (K) in die Einströmstellung verlagert wird.

2. Dekanter (10) nach Anspruch 1,
**dadurch gekennzeichnet, dass**
das wenigstens eine Abdeckelement (26) unterhalb der wenigstens einen Einströmöffnung (28) des Einlaufrohres (18) angeordnet ist.

3. Dekanter (10) nach Anspruch 1 oder 2,
**dadurch gekennzeichnet, dass**
das wenigstens eine Abdeckelement (26) in der Einströmstellung mit einer Unterseite des Einlaufrohrs (18) in dessen Entnahmeposition einen zumindest im Wesentlichen horizontal verlaufenden Einströmkanal ausbildet.

4. Dekanter (10) nach einem der vorhergehenden Ansprüche,
**dadurch gekennzeichnet, dass**
das wenigstens eine Abdeckelement (26) in der Schließstellung die wenigstens eine Einströmöffnung (28) zumindest im Wesentlichen dicht verschließt.

5. Dekanter (10) nach einem der vorhergehenden Ansprüche,
**dadurch gekennzeichnet, dass**
die Verlagerungseinrichtung (24) jeweilige, an einer Stirnseite des Einlaufrohres (18) gelagerte Hebelarme (32) aufweist, an welchen einerseits der wenigstens eine Auftriebskörper (34) und andererseits das wenigstens eine Abdeckelement (26) angeordnet sind.

6. Dekanter (10) nach Anspruch 5,
**dadurch gekennzeichnet, dass**
die Hebelarme (32) eine jeweilige Kulissenführung (40) für ein zugeordnetes, an der Stirnseite (36) des Einlaufrohres (18) angeordnetes Führungselement (42) aufweisen.

7. Dekanter (10) nach einem der Ansprüche 5 oder 6,
**dadurch gekennzeichnet, dass**
die Hebelarme (32) über ein jeweiliges, einstellbares Schwenklager am Einlaufrohr (18) angeordnet sind und/oder dass das Abdeckelement (26) am jeweiligen Hebelarm (32) einstellbar und befestigbar ist, wodurch die Relativlage und Dichtheit des Abdeckelements (26) in seiner Schließstellung relativ zu dem Einlaufrohr (18) einstellbar ist.

8. Dekanter (10) nach einem der vorhergehenden Ansprüche,
**dadurch gekennzeichnet, dass**
das wenigstens eine Auftriebselement (34) als mit einem Gas, insbesondere mit Luft, befüllter Hohlkörper ausgebildet ist.

9. Dekanter (10) nach einem der vorhergehenden Ansprüche,
**dadurch gekennzeichnet, dass**
das Abdeckelement (26) und/oder die Bauelemente (32, 34) der Verlagerungseinrichtung (24) aus einem Stahlwerkstoff, insbesondere einem Edelstahlwerkstoff oder einem beschichteten Stahlwerkstoff, und/oder aus einem Kunststoff beziehungsweise in Hybridbauweise dieser Werkstoffe gebildet sind.

10. Dekanter nach einem der vorhergehenden Ansprüche,
**dadurch gekennzeichnet, dass**
das Einlaufrohr (18) mit einer Mehrzahl von in einer Reihe angeordneten Einströmöffnungen (28) durchsetzt ist.

## Claims

1. A decanter (10) for a clarification facility, comprising an inlet pipe (18), which can be moved between a parked position and a removal position and which is penetrated by at least one inflow opening (28), via which clarified water below a floating sludge layer can be withdrawn from a clarification tank (12) and can be conducted into an outlet pipe (20), and comprising at least one cover element (26), which, in an inflow position, is arranged below and so as to overlap with the at least one inflow opening (28) penetrating the inlet pipe (18) on the underside and releases said opening, **characterized in that**
the cover element (26) can be moved between a closed position that closes the at least one inflow opening (28) and the inflow position by means of a movement device (24), which comprises at least one buoyancy element (34), by means of which the cover element (26) can be moved into the closed position as a result of immersing the buoyancy element (34) in the wastewater, with the cover element (26) being in the closed position before being immersed in the clarification tank (12) and passing through the floating sludge layer, and being moved into the inflow position by the buoyancy element (34) meeting and being immersed in the clarified water layer (K).

2. The decanter (10) according to claim 1,
**characterized in that**
the at least one cover element (26) is arranged below the at least one inflow opening (28) in the inlet pipe (18).

3. The decanter (10) according to claim 1 or 2,
**characterized in that**
the at least one cover element (26) forms, in the inflow position, an at least substantially horizontally extending inflow duct together with an underside of the inlet pipe (18) in its removal position.

4. The decanter (10) according to any of the preceding claims,
**characterized in that**
the at least one cover element (26) at least substantially tightly closes the at least one inflow opening (28) in the closed position.

5. The decanter (10) according to any of the preceding claims,
**characterized in that**
the movement device (24) comprises respective lever arms (32), which are mounted on an end face of the inlet pipe (18) and on which both the at least one buoyancy body (34) and the at least one cover element (26) are arranged.

6. The decanter (10) according to claim 5,
**characterized in that**
the lever arms (32) comprise a relevant link guide (40) for an associated guide element (42) arranged on the end face (36) of the inlet pipe (18).

7. The decanter (10) according to any of claims 5 or 6,
**characterized in that**
the lever arms (32) are arranged on the inlet pipe (18) by means of a relevant adjustable pivot bearing and/or **in that** the cover element (26) can be adjusted on and fastened to the relevant lever arm (32), as a result of which the relative position and tightness of the cover element (26) in its closed position is adjustable relative to the inlet pipe (18).

8. The decanter (10) according to any of the preceding claims,
**characterized in that**
the at least one buoyancy element (34) is configured as a hollow body filled with a gas, in particular with air.

9. The decanter (10) according to any of the preceding claims,
**characterized in that**
the cover element (26) and/or the components (32, 34) of the movement device (24) are made of a steel material, in particular a stainless steel material or a coated steel material, and/or are made of a plastics material or have a hybrid construction of these materials.

10. The decanter according to any of the preceding claims,
**characterized in that**
the inlet pipe (18) is penetrated by a plurality of inflow openings (28) arranged in a row.

## Revendications

1. Décanteur (10) pour station d'épuration, comportant un tuyau d'entrée (18) mobile entre une position de repos et une position de prélèvement, lequel est traversé par au moins une ouverture d'admission (28) par l'intermédiaire de laquelle de l'eau clarifiée peut être soutirée au-dessous d'une couche de boue flottante d'un réservoir de clarification (12) et peut être évacuée dans un tuyau d'évacuation (20), et comportant au moins un élément de couvercle (26) qui, dans une position d'admission, est agencé en dessous et en chevauchement de l'au moins une ouverture d'admission (28) traversant par le bas le tuyau d'entrée (18) et libère celle-ci,
**caractérisé en ce que**
l'élément de couvercle (26) peut être déplacé entre une position de fermeture fermant l'au moins une ouverture d'admission (28) et la position d'admission au moyen d'un dispositif de déplacement (24) qui comprend au moins un flotteur (34) au moyen duquel l'élément de couvercle (26) peut être déplacé dans la position de fermeture suite à une immersion du flotteur (34) dans les eaux résiduaires, l'élément de couvercle (26) se trouvant dans la position de fermeture avant l'immersion dans le clarificateur (12) et la traversée de la couche de boue flottante et étant déplacé dans la position d'admission par l'impact et l'immersion du flotteur (34) sur ou bien dans la couche d'eau clarifiée (K).

2. Décanteur (10) selon la revendication 1, **caractérisé en ce que**
l'au moins un élément de couvercle (26) est agencé au-dessous de l'au moins une ouverture d'admission (28) du tuyau d'entrée (18).

3. Décanteur (10) selon la revendication 1 ou 2, **caractérisé en ce que**
l'au moins un élément de couvercle (26), dans la position d'admission, forme un canal d'admission s'étendant au moins sensiblement horizontalement avec une face inférieure du tuyau d'entrée (18) dans sa position de retrait.

4. Décanteur (10) selon l'une des revendications précédentes, **caractérisé en ce que**
l'au moins un élément de couvercle (26) ferme au moins sensiblement hermétiquement l'au moins une ouverture d'admission (28) en position fermée.

5. Décanteur (10) selon l'une des revendications précédentes, **caractérisé en ce que**
le dispositif de déplacement (24) comprend des bras de levier (32) respectifs montés sur une face frontale du tuyau d'entrée (18), sur lesquels sont agencés d'une part l'au moins un flotteur (34) et d'autre part l'au moins un élément de couvercle (26).

6. Décanteur (10) selon la revendication 5, **caractérisé en ce que**
les bras de levier (32) comportent un guide à coulisse (40) respectif pour un élément de guidage (42) associé agencé sur la face frontale (36) du tuyau d'entrée (18).

7. Décanteur (10) selon l'une des revendications 5 ou 6, **caractérisé en ce que**
les bras de levier (32) sont agencés sur le tuyau d'entrée (18) par l'intermédiaire d'un palier pivotant respectif réglable et/ou **en ce que** l'élément de couvercle (26) est réglable et peut être fixé sur le bras de levier (32) respectif, grâce à quoi la position relative et l'étanchéité de l'élément de couvercle (26) dans sa position fermée peuvent être ajustées par rapport au tuyau d'entrée (18).

8. Décanteur (10) selon l'une des revendications précédentes, **caractérisé en ce que**
l'au moins un flotteur (34) est conçu comme un corps creux rempli d'un gaz, en particulier d'air.

9. Décanteur (10) selon l'une des revendications précédentes, **caractérisé en ce que**
l'élément de couvercle (26) et/ou les composants (32, 34) du dispositif de déplacement (24) sont réalisés en acier, en particulier un acier inoxydable ou un matériau en acier revêtu, et/ou en plastique ou bien en une conception hybride de ces matériaux.

10. Décanteur selon l'une des revendications précédentes, **caractérisé en ce que**
le tuyau d'entrée (18) est traversé par une pluralité d'ouvertures d'admission (28) agencées en rangée.
